# EUROPÄISCHE PATENTANMELDUNG

(11) **EP 0 993 904 A2**
(43) Veröffentlichungstag der Anmeldung: **19.04.2000**
(21) Anmeldenummer: 99120109.6
(22) Anmeldetag: 08.10.1999
(51) Int. Cl.: B23Q 16/00, B23Q 1/26, B23Q 5/58, B23Q 1/58, F16P 5/00

(54) **Linearantrieb**

(30) Priorität: 16.10.1998 DE 19847740; 21.10.1998 DE 19848420; 11.02.1999 DE 19905560
(71) Anmelder: HEKUMA Herbst Maschinenbau GmbH, 85386 Eching (DE)
(72) Erfinder: Herbst, Richard, 85386 Eching (DE)
(74) Vertreter: Witte, Alexander, Dr.-Ing.

(57) **Zusammenfassung**

Ein Linearantrieb umfaßt ein Profil (12) mit einem darauf verfahrbaren Läufer (14) und einem Anschlag (17) für den Läufer (14) am Ende des Profils (12). Der Anschlag (17) weist ein plastisch verformbares Element, insbesondere ein Stauchrohr (48) auf.

## Beschreibung

Die Erfindung betrifft einen Linearantrieb mit einem Profil, mit einem auf dem Profil verfahrbaren Läufer, und mit einem Anschlag für den Läufer am Ende des Profils.

In der Handhabungstechnik werden Linearantriebe eingesetzt, um Handhabungselemente, bspw. Greifer und dgl., entlang einer Achse von einem ersten Punkt zu einem zweiten Punkt zu verfahren. Ein typisches Beispiel für eine derartige Handhabungstechnik ist ein Handlingsystem für eine Kunststoff-Spritzgießmaschine. Ein solches Handlingssystem ist vorgesehen, um bei geöffnetem Werkzeug der Kunststoff-Spritzgießmaschine zwischen die Werkzeughälften einzufahren und z.B. ein fertiggespritztes Kunststofferzeugnis aus dem Werkzeug zu entnehmen. Das Handlingsystem kann ferner dazu eingesetzt werden, um zusätzliche Operationen auszuführen, bspw. Teile in das Werkzeug einzulegen, Kunststofferzeugnisse von Zapfen oder Gewinden abzunehmen bzw. abzuschrauben oder dgl.

Wenn man Linearantriebe in der Handhabungstechnik einsetzt, ist man einerseits bestrebt, Linearantriebe mit möglichst hohen Beschleunigungen und folglich auch hohen Verfahrgeschwindigkeiten einzusetzen. Im Bereich der Handlingsysteme für Kunststoff-Spritzgießmaschinen führen hohe Verfahrgeschwindigkeiten und -beschleunigungen zu einer Verkürzung der Zykluszeiten und damit zu einer Erhöhung der Produktivität einer Kunststoff-Spritzgießmaschine.

Um dieses Ziel zu erreichen, hat man unterschiedliche Antriebskonzepte erprobt, und es hat sich gezeigt, daß z.B. elektromagnetische Linearantriebe in besonderem Maße geeignet sind, die vorstehend genannten Aufgaben zu erfüllen.

Andererseits muß man beachten, daß es im Einsatz von Linearantrieben im Falle einer Störung vorkommen kann, daß der auf einem Profil des Linearantriebs verfahrbare Läufer unkontrolliert verfahren wird und damit über eine definierte Endstellung auf dem Profil hinwegfährt. Bei herkömmlichen Linearantrieben ist zu diesem Zweck am Ende des Profils ein Anschlag vorgesehen, d.h. ein Vorsprung oder dgl., gegen den der Läufer im Falle einer solchen Fehlfunktion aufprallt.

Bei vielen Anwendungsfällen, bspw. bei dem bereits erwähnten Anwendungsfall eines Handlingsystems in einer Kunststoff-Spritzgießmaschine kann der Läufer jedoch mit einem Greifer bestückt sein, der für weitere Funktionen ausgestattet ist, bspw. mit einer Kühlung, einer Drehvorrichtung und dgl. In diesem Falle ist die Masse des Läufers mitsamt der daran angeschlossenen Aggregate relativ hoch, so daß der mit voller Geschwindigkeit bewegte Läufer eine verhältnismäßig hohe kinetische Energie repräsentiert. Wenn ein solcher Läufer mit hoher Geschwindigkeit auf einen herkömmlichen Anschlag aufprallt, kann es folglich zu unerwünschten Folgen führen. Wenn der Anschlag nämlich elastisch ausgebildet ist, wird der mit hoher Geschwindigkeit und Masse aufprallende Läufer von dem elastischen Anschlag reflektiert und kann beim Zurückfahren Beschädigungen an weiteren Komponenten des Handlingsystems verursachen. Wenn der Anschlag andererseits unterdimensioniert sein sollte, wird er möglicherweise von dem aufprallenden Läufer infolge der hohen Geschwindigkeit und der hohen Masse abgerissen, so daß der Läufer insgesamt vom Profil gelöst wird.

Der Erfindung liegt demgegenüber die Aufgabe zugrunde, einen Linearantrieb der eingangs genannten Art, insbesondere für die Anwendung als Handlingsystem in einer Kunststoff-Spritzgießmaschine, dahingehend weiterzubilden, daß die vorstehend genannten Nachteile vermieden werden. Insbesondere soll es möglich sein, auch bei einer Fehlfunktion eines sehr schnellen und mit einer hohen Masse behafteten Läufers ein sicheres Abbremsen zu gewährleisten, ohne daß eine Beschädigung des Linearantriebs auftritt und ohne daß andere, umgebenden Komponenten beschädigt werden.

Bei einem Linearantrieb der eingangs genannten Art wird diese Aufgabe erfindungsgemäß dadurch gelöst, daß der Anschlag ein plastisch verformbares Element aufweist.

Die der Erfindung zugrundeliegende Aufgabe wird auf diese Weise vollkommen gelöst. Wenn nämlich ein definiert plastisch verformbares Element am Anschlag vorgesehen wird, kann die kinetische Energie des mit hoher Geschwindigkeit verfahrenen Läufers hoher Masse auf einfache Weise in Verformungs- bzw. Wärmeenergie umgewandelt werden, ohne daß andere Komponenten des Linearantriebes oder sonstige umgebende Komponenten beschädigt werden. Bei geeigneter Dimensionierung wird insbesondere verhindert, daß der Läufer beim Aufprallen auf den Anschlag von diesem reflektiert wird, was zu weiteren unkontrollierten Folgen führen kann.

Bei einer bevorzugten Weiterbildung der Erfindung umfaßt der Anschlag einen Stoßfänger, der an dem Ende des Profils und in der Bewegungsbahn des Läufers angeordnet ist, wobei der Stoßfänger mit dem Profil über das verformbare Element verbunden ist.

Diese Maßnahme hat den Vorteil, daß die Krafteinleitung in das plastisch verformbare Element auf direkte Weise geschehen kann, weil der aufprallende Läufer auf den Stoßfänger trifft und die kinetische Energie vom Läufer über den Stoßfänger ohne weitere Zwischenstufen direkt auf das verformbare Element übertragen wird.

Bei einer weiter bevorzugten Ausführungsform der Erfindung ist das verformbare Element zwischen Stoßfänger und Profil verspannbar.

Diese Maßnahme hat den Vorteil, daß die Verformung des Elementes unmittelbar beim Aufprallen des Läufers auf den Anschlag beginnen kann. Bei manchen verformbaren Elementen findet nämlich zunächst nur eine z.B. lineare Kompression statt, während der eigentliche Verformungsvorgang in Gestalt einer Faltung oder eines Knickens von Verformungselementen erst nach Überschreiten einer bestimmten Schwelle einsetzt. Wenn man daher vorsieht, das verformbare Element bereits vorzuspannen, kann diese Schwelle durch das Vorspannen bereits überwunden werden, so daß dann beim Aufprallen des Läufers auf den Anschlag sofort der eigentliche energieumwandelnde Verformungsvorgang einsetzt.

Dies gilt insbesondere dann, wenn das plastisch verformbare Element ein Stauchrohr ist.

Bei der axialen Verformung eines Rohres wird nämlich zunächst das Rohr bis zu einem Grenzwert eines axial wirkenden Drucks nur axial verformt, während bei Überschreiten eines Grenzwertes das Rohr balgenartig gefaltet und zusammengedrückt wird.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine äußerst schematisierte perspektivische Ansicht eines Ausführungsbeispiels eines erfindungsgemäßen Linearantriebes;
- Fig. 2: eine Schnittdarstellung in Richtung der Achse II-II von Fig. 1;
- Fig. 3: eine Darstellung, ähnlich Fig. 2, jedoch für eine andere Betriebsstellung des erfindungsgemäßen Linearantriebes.

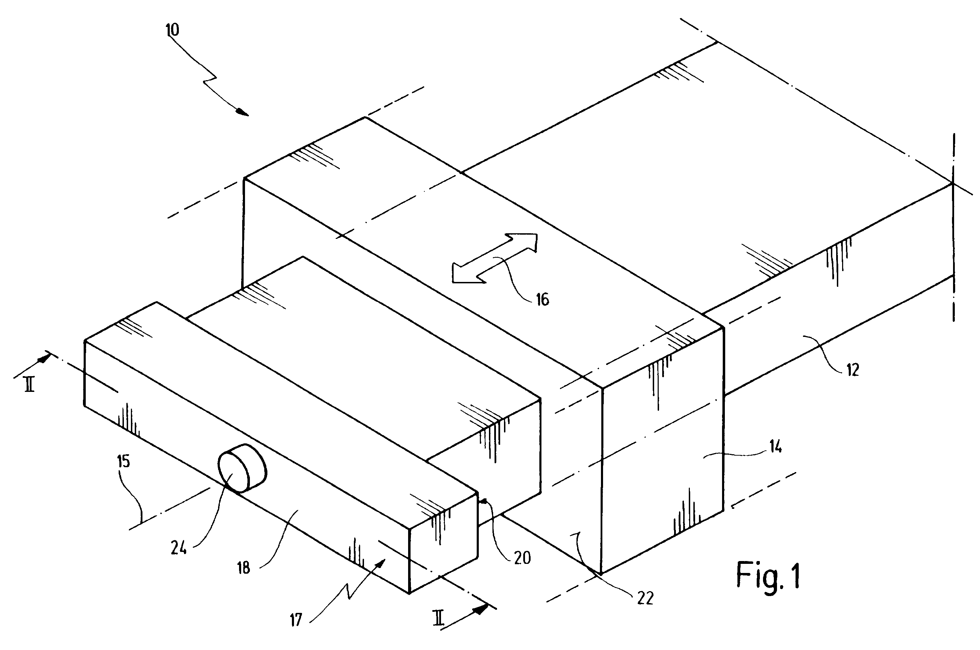

In Fig. 1 bezeichnet 10 insgesamt einen Linearantrieb, der im wesentlichen aus einem linearen Profil 12 und einem auf dem Profil 12 verfahrbaren Läufer 14 besteht. Wenn im vorliegenden Zusammenhang von "Linearantrieb" die Rede ist, so ist damit in erster Linie ein Antrieb gemeint, bei dem ein Läufer auf einem Profil entlang einer linearen Achse 15 verfahrbar ist. Es versteht sich jedoch, daß die Achse in gewissem Maße auch gekrümmt verlaufen kann.

In Fig. 1 ist mit einem Doppelpfeil 16 angedeutet, daß der Läufer 14 in beiden Richtungen auf dem Profil 12 verfahrbar ist. Die Verfahrmittel selbst sowie die zugehörige Steuerung für den Läufer 14 sind in Fig. 1 der Übersichtlichkeit halber nicht näher dargestellt.

Der Läufer 14 wird auf dem Profil 12 entlang der Achse 15 üblicherweise so verfahren, daß er stets einen gewissen Abstand vom Ende des Profils 12 einhält. Für den Fall, daß eine Fehlfunktion auftritt, ist jedoch ein Anschlag 17 am Ende des Profils 12 vorgesehen. Der Anschlag 17 ist ein mechanischer Anschlag.

Dies bedeutet, daß er als mechanisches Element ausgebildet ist, das in der Bewegungsbahn des Läufers 14 angeordnet und mit dem Profil 12 versehen ist. Der Anschlag 17 soll verhindern, daß der Läufer 14 unkontrolliert vom Profil 12 abspringt und dadurch ggf. Schäden verursacht.

Bei dem in Fig. 1 dargestellten Ausführungsbeispiel ist der Anschlag 17 als Stoßfänger 18 ausgebildet, d.h. als eine Art Stoßstange, die am Ende des Profils 12 in der Bewegungsbahn des Läufers 14 angeordnet ist. Der Stoßfänger 18 weist eine dem Läufer 14 zugewandte Stirnseite 20 auf, auf die der Läufer 14 mit einer Stirnseite 22 aufprallt, falls die oben genannte Fehlfunktion auftreten sollte.

Mit 24 ist eine Schraubverbindung angedeutet, die den Stoßfänger 18 mit dem Profil 12 verbindet, wie noch im einzelnen dargelegt werden wird.

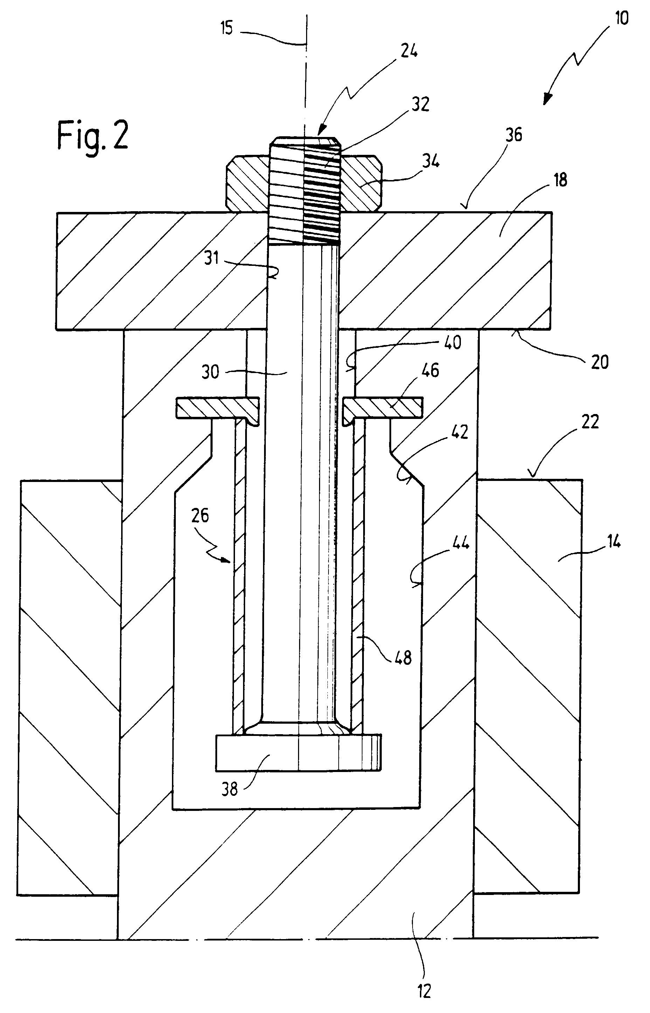

Fig. 2 zeigt in einer Querschnittsdarstellung Einzelheiten der Schraubverbindung 24.

Man erkennt, daß die Verbindung zwischen Stoßfänger 18 und Profil 12 über einen Pralltopf 26, d.h. über ein plastisch verformbares Element dargestellt wird.

Zu diesem Zweck ist eine in der Achse 15 verlaufende Stange 30 vorgesehen, die sich durch eine Bohrung 31 im Stoßfänger 18 erstreckt. Die Stange 30 ist an ihrem in Fig. 2 oberen Ende mit einem Gewinde 32 versehen, auf das eine Mutter 34 aufgeschraubt ist.

Die Mutter 34 ist bis auf eine Oberfläche 36 des Stoßfängers 18 aufgeschraubt.

An dem vom Gewinde 32 abgewandten Ende ist die Stange 30 mit einem im Querschnitt vergrößerten Kopf 38 versehen.

Die Stange 30 taucht mit ihrem Kopf 38 in eine entlang der Achse 15 verlaufende Bohrung 40 im Profil 12. Die Bohrung 40 erweitert sich nach innen über einen Übergang 42 in einen Raum 44, der das in Fig. 2 untere Ende der Stange 30 sowie den Kopf 38 aufnimmt.

Im Bereich des Überganges 42 ist eine Anschlagscheibe 46 im Profil 12 befestigt. Zwischen der Anschlagscheibe 46 und dem Kopf 38 ist ein Stauchrohr 48 angeordnet. Das Stauchrohr 48 besteht vorzugsweise aus Aluminium oder einem anderen geeigneten Werkstoff mit hoher Verformungsenergie.

Wie man leicht aus Fig. 2 erkennt, bewirkt ein Anziehen der Mutter 34 auf dem Gewinde 32, daß das Stauchrohr 48 zwischen Kopf 38 und Anschlagscheibe 46 verspannt wird. Insbesondere kann die Mutter 34 derart angezogen werden, daß das Stauchrohr 48 aus dem in Fig. 2 dargestellten unverformten Zustand in einen Zustand übergeht, in dem es bereits geringfügig zieharmonika- oder balgenartig angestaucht wird. Dieser Zustand wird durch Anziehen der Mutter 34 hergestellt, wenn der Pralltopf 26 am Ende des Profils 12 montiert wird.

Im Regelfall wird sich der Läufer 14 auf dem Profil 12 bewegen, ohne daß die Stirnseite 22 des Läufers 14 auf die Stirnseite 20 des Stoßfängers 18 aufprallt.

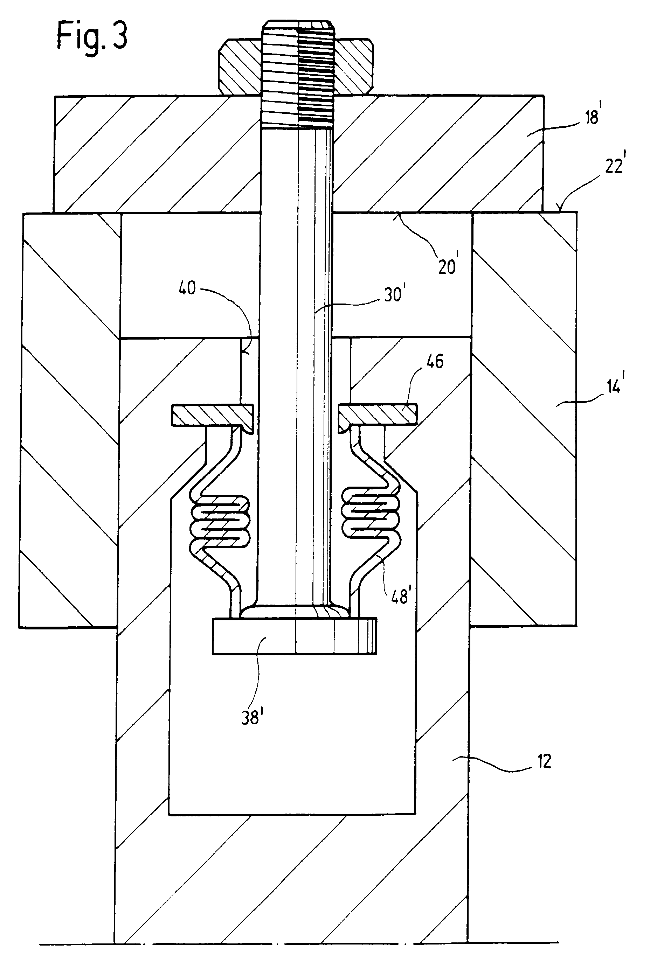

In Fig. 3 ist nun eine Situation dargestellt, in der der Läufer 14 mit hoher Geschwindigkeit und daher mit hoher kinetischer Energie auf den Stoßfänger 18 aufgelaufen ist. Soweit in Fig. 3 Elemente dargestellt sind, die gegenüber der Darstellung in Fig. 2 eine Bewegung durchgeführt haben, sind diese Elemente bei ihren Bezugszeichen mit einem Apostroph versehen.

Wie man leicht aus Fig. 3 erkennt, hat der Aufprall des Läufers 14' auf den Stoßfänger 18' bewirkt, daß dieser mit seiner Stirnseite 20' vom Profil 12 abgehoben wurde. Die Stange 30' wurde folglich aus der Bohrung 40 herausgezogen. Das zwischen dem Kopf 38' und der Anschlagscheibe 46' befindliche Stauchrohr 48' wurde infolgedessen in seiner Länge gestaucht und - wie in Fig. 3 gezeigt - zieharmonika- oder balgenartig zusammengeschoben. Durch diese Verformung des Stauchrohrs 48 wurde die dem bewegten Läufer 14' innewohnende kinetische Energie in Verformungsenergie und damit in Wärme umgewandelt, während im übrigen keine Beschädigung der Elemente eingetreten ist.

Sofern daher bei dem Linearantrieb 10' ein "Crash" der vorstehend erläuterten Art auftritt, muß lediglich das Stauchrohr 48 ersetzt werden. Im übrigen ist der Zwischenfall durch die geschilderten Maßnahmen insoweit begrenzt, und die übrigen Elemente des Linearantriebes 10 werden nicht in Mitleidenschaft gezogen.

## Patentansprüche

1. Linearantrieb mit einem Profil (12), mit einem auf dem Profil (12) verfahrbaren Läufer (14), und mit einem Anschlag (17) für den Läufer (14) am Ende des Profils (12), dadurch gekennzeichnet, daß der Anschlag (17) ein plastisch verformbares Element aufweist.

2. Linearantrieb nach Anspruch 1, dadurch gekennzeichnet, daß der Anschlag (17) einen Stoßfänger (18) umfaßt, der an dem Ende des Profils (12) angeordnet und in der Bewegungsbahn des Läufers (14) angeordnet ist, und daß der Stoßfänger (18) mit dem Profil (12) über das verformbare Element verbunden ist.

3. Linearantrieb nach Anspruch 2, dadurch gekennzeichnet, daß das verformbare Element zwischen Stoßfänger (18) und Profil (12) verspannbar ist.

4. Linearantrieb nach einem oder mehreren der Ansprüche 1 bis 3, dadurch gekennzeichnet, daß das plastisch verformbare Element ein Stauchrohr (48) ist.

5. Linearantrieb nach einem oder mehrteren der Ansprüche 1 bis 4, dadurch gekennzeichnet, daß der Anschlag (17) mit einer in Verfahrrichtung (16) des Läufers (14) angeordneten Stange (30) verbunden ist, die axial in das Profil (12) eintaucht und mit dem Profil (12) über das elastisch verformbare Element verbunden ist.

6. Linearantrieb nach Anspruch 5, dadurch gekennzeichnet, daß die Stange (30) mittels einer Schraubverbindung (32, 34) gegen den Anschlag (17) verspannbar ist.

7. Verwendung eines Linearantriebes (10) als Handlingsystem für eine Kunststoff-Spritzgießmaschine.
